# EUROPEAN PATENT APPLICATION

(11) **EP 4 641 092 A1**
(43) Date of publication of application: **29.10.2025**
(21) Application number: 23907094.9
(22) Date of filing: 20.12.2023
(51) Int. Cl.: F23R 3/42, F01D 25/00, F02C 7/00

(54) **COMBUSTOR FOR GAS TURBINES**

(30) Priority: 23.12.2022 JP 2022207279
(71) Applicant: KAWASAKI JUKOGYO KABUSHIKI KAISHA, Kobe-shi, Hyogo 650-8670 (JP)
(72) Inventor: MATSUYAMA, Ryusuke, Kobe-shi, Hyogo 650-8670 (JP); YOSHIDA, Hiroaki, Kobe-shi, Hyogo 650-8670 (JP)
(74) Representative: Dantz, Jan Henning
(86) International application number: PCT/JP2023/045722
(87) International publication number: WO 2024/135734

(57) **Abstract**

A combustor of a gas turbine includes a seal that seals a gap between a shell and a liner. The seal includes: an axial portion that is in contact with an inner peripheral surface of the shell and extends in an axial direction and circumferential direction of the shell; a radial portion that projects inward in a radial direction of the shell from the axial portion beyond an outer peripheral surface of the liner, is in contact with an end surface of the liner in the axial direction, and extends in the radial direction and the circumferential direction; and a positioning portion that positions the seal relative to the shell and the liner such that the seal is in contact with the inner peripheral surface of the shell and the end surface of the liner.

## Description

### Technical Field

The present disclosure relates to a combustor of a gas turbine.

### Background Art

In recent years, a combustion temperature in a gas turbine is increasing for the purpose of improving fuel efficiency. Proposed as a combustor of a gas turbine disclosed in PTL 1 is a combustor in which a liner is located inside a shell surrounding a combustion chamber and is fastened to the shell. The shell and the liner include cooling holes. Air which has entered into a gap between the shell and the liner through the cooling hole of the shell is discharged through the cooling hole of the liner into the combustion chamber and cools an inner peripheral surface of the liner.

### Citation List

### Patent Literature

PTL 1: U.S. Patent No. 9534783

### Summary of Invention

### Technical Problem

To adequately discharge the air through the cooling hole of the liner into the combustion chamber, the pressure of the air having entered the gap between the shell and the liner needs to be kept high. However, when compressed air leaks from an upstream side or downstream side of this gap in a flow direction of a combustion gas of the combustion chamber, the air is not adequately discharged through the cooling hole of the liner into the combustion chamber. Therefore, the upstream side and downstream side of this gap may be closed by seals.

However, when the amount of thermal expansion of the liner and the amount of thermal expansion of the shell are different from each other, it is difficult to close the gap between the shell and the liner by the seals.

One aspect of the present disclosure is to suppress leakage of air in a gap between a shell and a liner.

### Solution to Problem

A combustor of a gas turbine according to one aspect of the present disclosure includes: a shell surrounding a combustion chamber; a liner located inside the shell in a radial direction of the shell and facing the combustion chamber; a fixture attaching the liner to the shell with a gap between the shell and the liner; and a seal that is shorter than the shell in an axial direction of the shell, extends in a circumferential direction of the shell, and seals the gap between the shell and the liner. The seal includes: an axial portion that is in contact with an inner peripheral surface of the shell and extends in the axial direction and the circumferential direction; a radial portion that projects inward in the radial direction from the axial portion beyond an outer peripheral surface of the liner, is in contact with an end surface of the liner in the axial direction, and extends in the radial direction and the circumferential direction; and a positioning portion that positions the seal relative to the shell and the liner such that the seal is in contact with the inner peripheral surface of the shell and the end surface of the liner.

### Advantageous Effects of Invention

According to one aspect of the present disclosure, since the seal is shorter than the shell in the axial direction, the amount of thermal expansion of the seal in the axial direction becomes smaller than the amount of thermal expansion of the shell in the axial direction. Therefore, even when a thermal expansion difference is generated between the shell and the liner, the thermal expansion difference between the seal and the liner in the axial direction becomes small. As a result, a gap generated between the radial portion of the seal and the end surface of the liner can be suppressed. Therefore, the leakage of the compressed air in the gap between the shell and the liner can be suppressed.

### Brief Description of Drawings

FIG. 1 is a schematic sectional view of a gas turbine according to an embodiment.
FIG. 2 is a sectional view when viewed from a downstream side in a flow direction of compressed air of a combustor of the gas turbine of FIG. 1.
FIG. 3 is a sectional view taken along line III-III of the combustor of FIG. 2.
FIG. 4 is a partial sectional perspective view of major components of the combustor of FIG. 3.
FIG. 5 is a sectional view taken along line V-V of FIG. 4.
FIG. 6 is a sectional view taken along line VI-VI of FIG. 4.
FIG. 7 is a diagram showing a slit of a seal of FIG. 4.

### Description of Embodiments

Hereinafter, an embodiment will be described with reference to the drawings. An axis X of a gas turbine 1 is the same as an axis of a combustor 3. A direction orthogonal to the axis X of the combustor 3 is referred to as a radial direction R of the combustor 3, and a direction extending around the axis X is referred to as a circumferential direction C of the combustor 3. Regarding a flow direction F of compressed air in a combustion chamber 16, a side toward fuel injectors 17 is referred to as an upstream side, and a side toward a discharge port 16a is referred to as a downstream side.

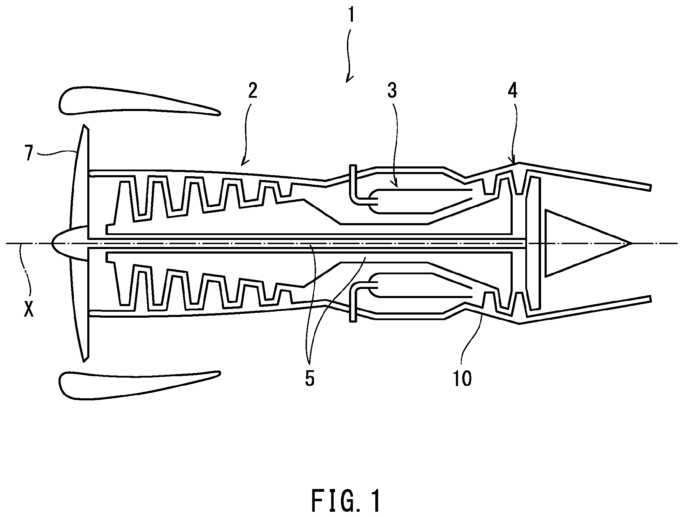

FIG. 1 is a schematic sectional view of the gas turbine 1 of the embodiment. As shown in FIG. 1, the gas turbine 1 includes a compressor 2, the combustor 3, a turbine 4, a rotating shaft 5, a casing 10, and a fan 7. In the gas turbine 1, air introduced into the casing 10 from the outside is compressed by the compressor 2, and the compressed air compressed by the compressor 2 is guided to the combustor 3. Then, energy of a high-temperature high-pressure combustion gas obtained by combusting fuel together with the compressed air in the combustor 3 is taken out as rotational power in the turbine 4.

The turbine 4 is coupled to the compressor 2 through the rotating shaft 5. An axis of the rotating shaft 5 coincides with the axis X of the gas turbine 1. The fan 7 is connected to a front end portion of the rotating shaft 5. The rotational power generated by the turbine 4 drives the compressor 2 and the fan 7. There are various types of gas turbines. A turbo fan engine drives a fan by rotational power mainly generated by a turbine and is used as an aircraft engine. FIG. 1 shows the turbo fan engine that is a form of the gas turbine. However, the form of the gas turbine is not limited to this.

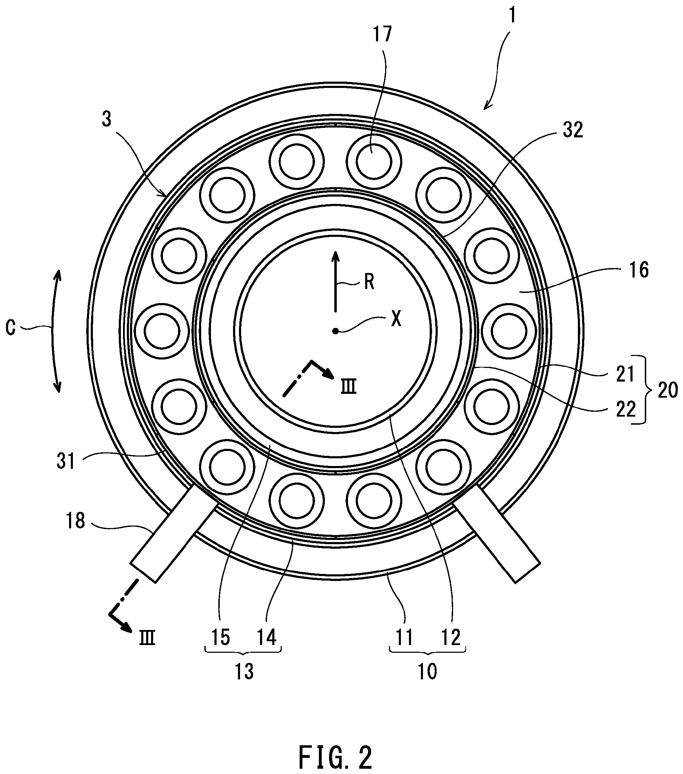

FIG. 2 is a sectional view when viewed from the downstream side in the flow direction of the compressed air of the combustor 3 of the gas turbine 1 of FIG. 1. As shown in FIG. 2, the combustor 3 has a tubular shape. For example, the combustor 3 is an annular combustor having an annular shape surrounding the axis X of the gas turbine 1. The combustor 3 may be of a type other than the annular type. The material of a shell 14 and the material of a liner 20 are not especially limited, and the shell 14 and the liner 20 may be any parts as long as a thermal expansion difference is generated between the shell 14 and the linear 20. In the present embodiment, the shell 14 is a shell made of metal, and the liner 20 is a CMC linear made of a ceramic matrix composite.

In the combustor 3, the casing 10 includes: a tubular outer casing 11; and a tubular inner casing 12 concentrically located inside the outer casing 11. The outer casing 11 and the inner casing 12 define an annular internal space. An inside of the combustor 3 denotes an inside of the outer casing 11 in the radial direction R and an outside of the inner casing 12 in the radial direction R.

A shell 13 as a combustion liner is located in the annular internal space of the casing 10 so as to be concentric with the casing 10. A radial direction of the shell 13 coincides with the radial direction R of the combustor 3. An axial direction of the shell 13 coincides with an axial direction X of the combustor 3. A circumferential direction of the shell 13 coincides with the circumferential direction C of the combustor 3. The shell 13 surrounds the combustion chamber 16. The shell 13 is made of metal. The shell 13 includes: a tubular outer shell 14; and a tubular inner shell 15 concentrically located inside the outer shell 14. An inside of the shell 13 denotes an inside of the outer shell 14 in the radial direction R and an outside of the inner shell 15 in the radial direction R.

The fuel injectors 17 that inject the fuel to the combustion chamber 16 are annularly lined up along the combustion chamber 16 at the upstream side of the combustion chamber 16. The fuel injectors 17 are lined up in the circumferential direction C on a virtual circle that is concentric with the shell 13. An ignition plug 18 is located at the shell 13. The ignition plug 18 generates a spark for igniting a fuel-air mixture in the combustion chamber 16 at the start of the gas turbine 1. A CMC liner 20 is located in the annular internal space of the shell 13 so as to be concentric with the casing 10 and the shell 13.

The CMC liner 20 is made of, for example, a ceramic matrix composite. The coefficient of thermal expansion of the CMC liner 20 is smaller than the coefficient of thermal expansion of the shell 13. The CMC liner 20 includes: a tubular outer liner 21; and a tubular inner liner 22 concentrically located inside the outer liner 21. The outer liner 21 covers an inner peripheral surface of the outer shell 14. The inner liner 22 covers an outer peripheral surface of the inner shell 15.

The outer liner 21 may be an assembly of liner panels which are adjacently lined up in the circumferential direction so as to form a tubular shape. Similarly, the inner liner 22 may be an assembly of liner panels which are adjacently lined up in the circumferential direction so as to form a tubular shape. One or each of the outer liner 21 and the inner liner 22 may be a tubular body integrally molded in a tubular shape without being divided into the liner panels lined up in the circumferential direction. Moreover, each liner panel is not limited to a circular-arc plate and may be a flat plate. The liner including the liner panels does not have to have a cylindrical shape and may have a polygonal tubular shape.

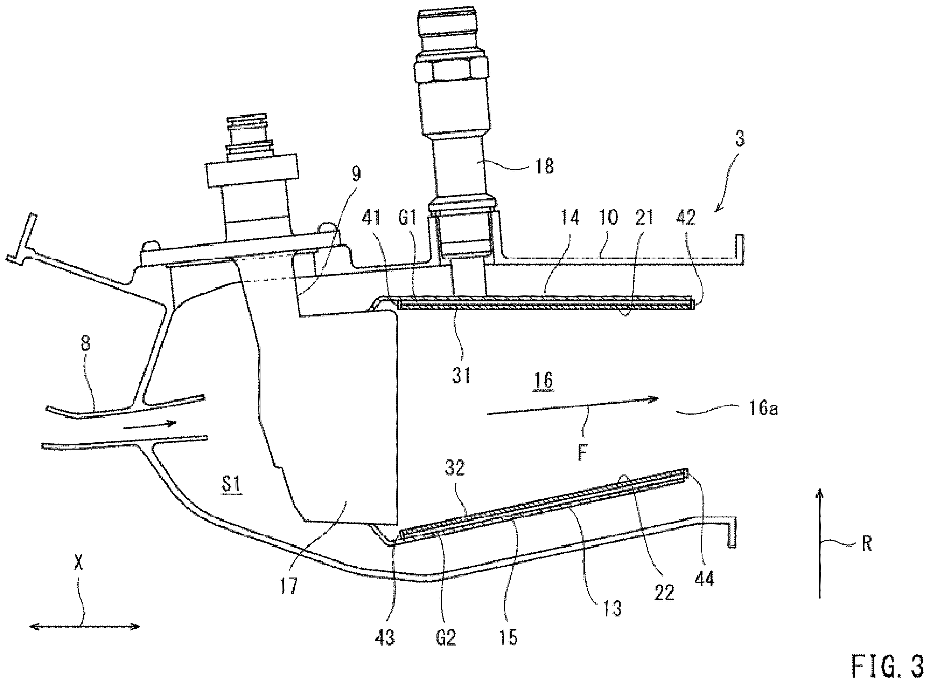

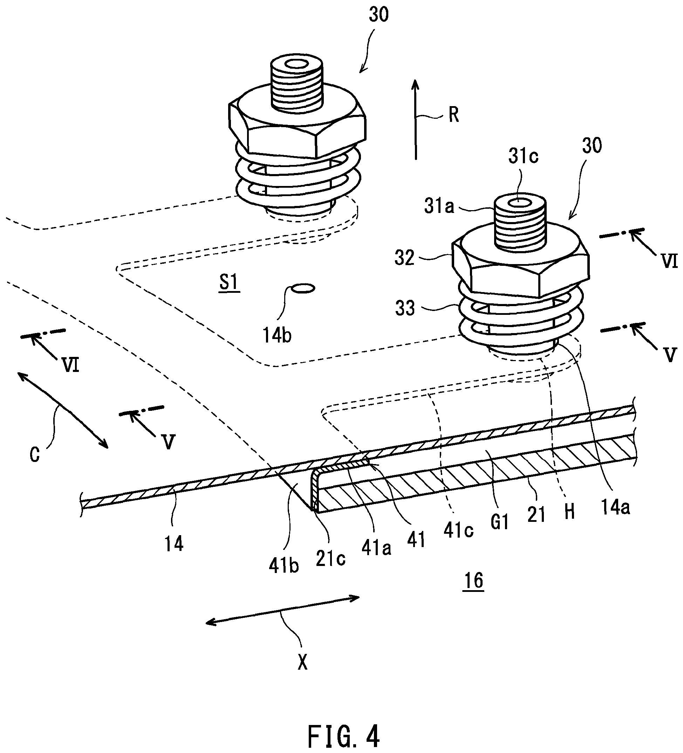

FIG. 3 is a sectional view taken along line III-III of the combustor 3 of FIG. 2. As shown in FIG. 3, a diffuser 8 is located at an upstream portion of the casing 10. The diffuser 8 takes the compressed air, generated by the compressor 2, into the casing 10. The fuel injectors 17 are supported by a stem 9 fixed to the casing 10. Part of the compressed air taken into a space S1 in the casing 10 is supplied to the fuel injectors 17 for combustion. The rest of the compressed air taken into the space S1 in the casing 10 cools an outer surface of the shell 13, and part of the rest of the compressed air is supplied as cooling air into the shell 13 through cooling openings 14b (see FIG. 4) of the shell 13.

The outer liner 21 is located so as to be spaced apart from the outer shell 14 toward the inside in the radial direction R. The inner liner 22 is located so as to be spaced apart from the inner shell 15 toward the outside in the radial direction R. The outer liner 21 and the inner liner 22 are attached to the shell 13 by fixtures 30 (see FIG. 4) so as to be spaced apart from the shell 13. The outer liner 21 and the inner liner 22 define the combustion chamber 16. A combustion gas in the combustion chamber 16 is discharged toward the turbine 4 (see FIG. 1) through the discharge port 16a defined by an end of the outer liner 21 and an end of the inner liner 22 which are located at the downstream side in the flow direction F of the compressed air in the combustion chamber 16.

A gap G1 between the outer shell 14 and the outer liner 21 is sealed by metal outer seals 41 and 42 from both sides in the axial direction X. To be specific, the outer seal 41 seals the gap G1 from the upstream side in the flow direction F, and the outer seal 42 seals the gap G1 from the downstream side in the flow direction F. A gap G2 between the inner shell 15 and the inner liner 22 is sealed by metal inner seals 43 and 44 from both sides in the axial direction X. To be specific, the inner seal 43 seals the gap G2 from the upstream side in the flow direction F, and the inner seal 44 seals the gap G2 from the downstream side in the flow direction F.

An attaching structure in which the outer liner 21 is attached to the outer shell 14 and an attaching structure in which the inner liner 22 is attached to the inner shell 15 are the same as each other. Moreover, the structures of the outer seals 41 and 42 and the inner seals 43 and 44 are also the same as each other. Therefore, the attaching structure in which the outer liner 21 is attached to the outer shell 14 and the outer seal 41 that seals the gap G1 from the upstream side will be representatively described as below. In the following description, the outer shell 14 is referred to as a shell, and the outer liner 21 is referred to as a CMC liner. The outer seal 41 is referred to as a seal.

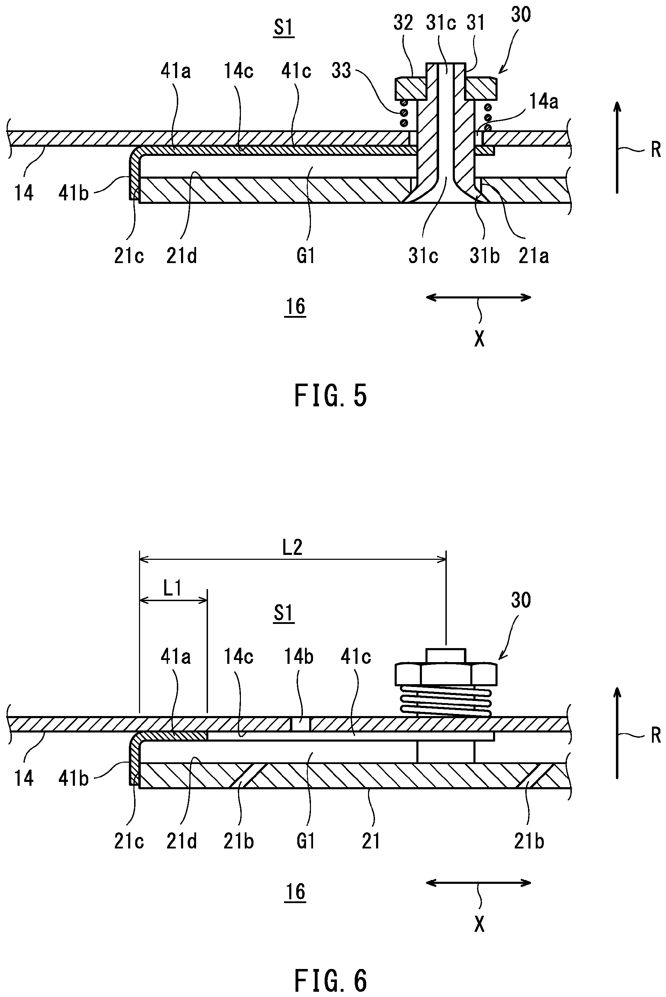

FIG. 4 is a partial sectional perspective view of major components of the combustor 3 of FIG. 3. FIG. 5 is a sectional view taken along line V-V of FIG. 4. FIG. 6 is a sectional view taken along line VI-VI of FIG. 4. As shown in FIGS. 4 to 6, the shell 14 includes a through hole 14a and a cooling hole 14b. The CMC liner 21 includes a support hole 21a and a cooling hole 21b. The fixture 30 attaches the CMC liner 21 to the shell 14 with the gap G1 between the shell 14 and the CMC liner 21. The fixture 30 is made of, for example, metal, but may be made of a material other than metal. The configuration of the fixture 30 is not especially limited, and the below-described configuration of the fixture 30 is merely an example.

The fixture 30 is an assembly including a support 31, a fixing member 32, and a biasing member 33. The support 31 is inserted into the support hole 21a of the CMC liner 21 and the through hole 14a of the shell 14 from the inside in the radial direction R. The through hole 14a of the shell 14 has play with respect to a shaft portion 31a of the support 31. The support 31 includes the shaft portion 31a, a head portion 31b, and an air passage 31c connected to the combustion chamber 16. The shaft portion 31a extends in the radial direction R and is in the through hole 14a of the shell 14. A portion of an outer peripheral surface of the shaft portion 31a which is located outside the shell 14 in the radial direction R includes a thread or an engagement groove.

The head portion 31b is located at an end portion of the shaft portion 31a which is located at the inside in the radial direction R. An outer diameter of the head portion 31b is larger than an outer diameter of the shaft portion 31a. An outer peripheral surface of the head portion 31b includes a tapered surface that increases in diameter from the outside toward the inside in the radial direction R. The head portion 31b is located at the support hole 21a of the CMC liner 21. The tapered surface of the outer peripheral surface of the head portion 31b is in contact with a tapered surface of an inner peripheral surface of the support hole 21a from the inside in the radial direction R. To be specific, the head portion 31b supports the CMC liner 21 from the inside in the radial direction R. Instead of including the tapered surfaces in the outer peripheral surface of the head portion 31b and the inner peripheral surface of the support hole 21a, the head portion 31b of the support 31 may be in contact with an inner peripheral surface of the CMC liner 21.

The air passage 31c extends inside the support 31 in the radial direction R of the support 31 from the shaft portion 31a to the head portion 31b. The air passage 31c is open to the space S1 located outside the shell 14 in the radial direction R and is open to the combustion chamber 16. A portion of the air passage 31c which is located at the inside in the radial direction R has a truncated cone shape that expands toward the combustion chamber 16. The compressed air in the space S1 flows through the air passage 31c and is discharged as the cooling air to the combustion chamber 16 along the inner peripheral surface of the CMC liner 21. The air passage 31c may be omitted.

The fixing member 32 is fixed to the shaft portion 31a of the support 31 at the outside of the shell 14 in the radial direction R. An outer shape of the fixing member 32 is large than the through hole 14a of the shell 14. The fixing member 32 is, for example, a nut that is threadedly engaged with the thread on the outer peripheral surface of the shaft portion 31a but may be a C-shaped clip that is engaged with the engagement groove on the outer peripheral surface of the shaft portion 31a. The biasing member 33 is sandwiched between the shell 14 and the fixing member 32. The biasing member 33 is, for example, a coil spring but may be a disc spring.

The compressed air which has flowed from the compressor 2 (see FIG. 1) through the diffuser 8 (see FIG. 3) into the space S1 flows through the cooling hole 14b of the shell 14 into the gap G1 between the shell 14 and the CMC liner 21 as the cooling air. The CMC liner 21 is held since the elastic force of the biasing member 33 acts against force of the compressed air of the gap G1 which pushes the CMC liner 21 inward in the radial direction R. The compressed air in the gap G1 is discharged as the cooling air through the cooling hole 21b of the CMC liner 21 to the combustion chamber 16 along the inner peripheral surface of the CMC liner 21.

The seal 41 seals the gap G1 between the shell 14 and the CMC liner 21 from the axial direction X. The seal 41 is made of, for example, metal. The metal material of the seal 41 may be the same as the metal material of the shell 14. The seal 41 has a ring shape that extends in the circumferential direction C along the gap G1. The seal 41 having the ring shape may be divided into members lined up in the circumferential direction C. The seal 41 is internally fitted to the shell 14. The seal 41 is shorter than the shell 14 in the axial direction X. Moreover, the seal 41 is shorter than the CMC liner 21 in the axial direction X.

The seal 41 includes an axial portion 41a, a radial portion 41b, and positioning portions 41c. The axial portion 41a is a plate-shaped portion extending in the axial direction X and the circumferential direction C. To be specific, a thickness direction of the plate-shaped axial portion 41a coincides with the radial direction R. The axial portion 41a is in contact with an inner peripheral surface 14c of the shell 14. The axial portion 41a is shorter than the CMC liner 21 in the axial direction X. For example, a length L1 of the axial portion 41a in the axial direction X is shorter than a distance L2 from an end surface 21c of the CMC liner 21 to a center of the fixture 30 in the axial direction X. In other words, a distance L1 in the axial direction X from the end surface 21c of the CMC liner 21 to an end of the axial portion 41a which is located close to the fixture 30 is shorter than the distance L2 from the end surface 21c of the CMC liner 21 to the center of the fixture 30 in the axial direction X. The distance L1 may be less than half the distance L2.

The radial portion 41b of the seal 41 projects inward in the radial direction R. For example, the radial portion 41b projects inward in the radial direction R from the axial portion 41a. In other words, the radial portion 41b projects inward in the radial direction R from an end of the axial portion 41a which is located far from the fixture 30 in the axial direction X. The section of the entirety including the axial portion 41a and the radial portion 41b when viewed in the circumferential direction C has an L shape. However, the shape of the entirety including the axial portion 41a and the radial portion 41b is not especially limited. The radial portion 41b is a plate-shaped portion extending in the radial direction R and the circumferential direction C. To be specific, a thickness direction of the plate-shaped radial portion 41b coincides with the axial direction X. The radial portion 41b extends inward in the radial direction R beyond an outer peripheral surface 21d of the CMC liner 21. The radial portion 41b is in contact with the end surface 21c of the CMC liner 21 in the axial direction X.

The positioning portions 41c position the seal 41 relative to the shell 14 and the CMC liner 21 such that the seal 41 is in contact with the inner peripheral surface 14c of the shell 14 and the end surface 21c of the CMC liner 21. In the present embodiment, the positioning portions 41c project from the axial portion 41a toward the fixtures 30. The positioning portions 41c are located at intervals in the circumferential direction C. Each positioning portion 41c is attached to the fixture 30. The positioning portion 41c is attached to a portion of the fixture 30 which exists in the gap G1. The configuration of the fixture 30 is not especially limited. Moreover, the number of positioning portions 41c may be one or more. Furthermore, the shapes of the positioning portions 41c and the positions to which the positioning portions 41c are attached are not especially limited.

In the present embodiment, the positioning portion 41c is a plate-shaped portion extending in the axial direction X. To be specific, a thickness direction of the plate-shaped positioning portion 41c coincides with the radial direction R. The positioning portions 41c are in contact with the inner peripheral surface 14c of the shell 14. The fixtures 30 are attached to the CMC liner 21. Therefore, the positioning portions 41c position the seal 41 relative to the shell 14 and the CMC liner 21 by being attached to the fixtures 30. The positioning portion 41c includes an attachment hole H in which the fixture 30 is located. Specifically, the shaft portion 31a of the support 31 of the fixture 30 is fitted to the attachment hole H of the positioning portion 41c. The section of the entire seal 41 including the positioning portions 41c when viewed in the circumferential direction C has an L shape.

According to the above-described configuration, since the axial portion 41a of the seal 41 is in contact with the inner peripheral surface 14c of the shell 14, and the radial portion 41b of the seal 41 is in contact with the end surface 21c of the CMC liner 21, the compressed air in the gap G1 between the shell 14 and the CMC liner 21 is prevented from leaking from an end of the gap G1 in the axial direction X. Then, since the seal 41 is shorter than the shell 14 in the axial direction X, the amount of thermal expansion of the seal 41 in the axial direction X is smaller than the amount of thermal expansion of the shell 14 in the axial direction X.
Therefore, even when the thermal expansion difference is generated between the shell 14 and the CMC liner 21, the thermal expansion difference between the seal 41 and the CMC liner 21 in the axial direction X is small. As a result, a gap generated between the radial portion 41b of the seal 41 and the end surface 21c of the CMC liner 21 can be suppressed. Therefore, the leakage of the compressed air in the gap G1 between the shell 14 and the CMC liner 21 can be suppressed.

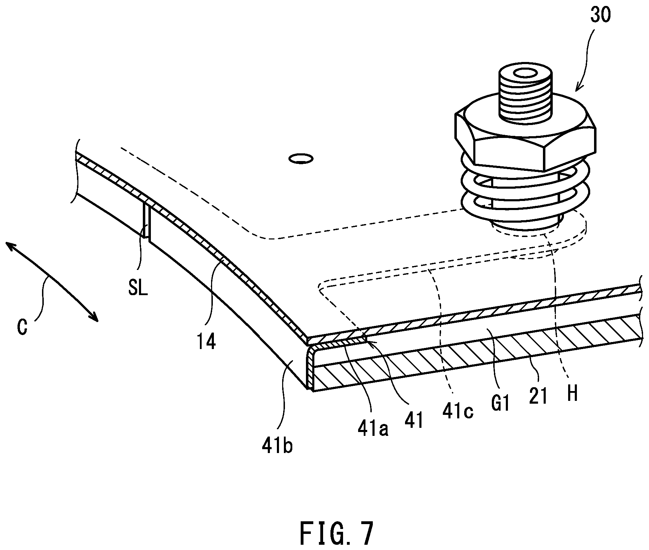

FIG. 7 is a diagram showing a slit SL of the seal 41 of FIG. 4. As shown in FIG. 7, the seal 41 may include the slit SL located at a portion of the seal 41 in the circumferential direction C. For example, the slit SL may be located at the radial portion 41b of the seal 41 so as to extend in the radial direction R. Thus, the generation of stress concentration when the seal 41 thermally expands can be prevented.

The seal 41 may include one slit SL or may include slits SL located at intervals in the circumferential direction C. The slit SL may be located at the axial portion 41a so as to extend in the axial direction X. The slit SL may be located at only the axial portion 41a, only the radial portion 41b, or both of the axial portion 41a and the radial portion 41b.

The technology of the present disclosure is not limited to the above embodiment. For example, the seal 41 does not have to be one ring-shaped piece and may be divided into pieces. To be specific, pieces may be combined with each other to constitute the ring-shaped seal 41. The positioning portion 41c of the seal 41 may be directly attached to the CMC liner 21. For example, the CMC liner 21 may include a projection, and the positioning portion 41c of the seal 41 may be attached to this projection. Moreover, the positioning portion of the seal 41 may be an attachment hole located the axial portion 41a. To be specific, the positioning portion projecting from the axial portion 41a in the axial direction X may be omitted, the size of the axial portion 41a in the axial direction X may be increased, and the attachment hole of the axial portion 41a may be attached to the fixture 30.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiment. For example, some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A combustor of a gas turbine,
the combustor including:
a shell surrounding a combustion chamber;
a liner located inside the shell in a radial direction of the shell and facing the combustion chamber;
a fixture attaching the liner to the shell with a gap between the shell and the liner; and
a seal that includes metal, is shorter than the shell in an axial direction of the shell, extends in a circumferential direction of the shell, and seals the gap between the shell and the liner, wherein
the seal includes
   an axial portion that is in contact with an inner peripheral surface of the shell and extends in the axial direction and the circumferential direction,
   a radial portion that projects inward in the radial direction from the axial portion beyond an outer peripheral surface of the liner, is in contact with an end surface of the liner in the axial direction, and extends in the radial direction and the circumferential direction, and
   a positioning portion that positions the seal relative to the shell and the liner such that the seal is in contact with the inner peripheral surface of the shell and the end surface of the liner.

According to this configuration, since the seal is shorter than the shell in the axial direction, the amount of thermal expansion of the seal in the axial direction becomes smaller than the amount of thermal expansion of the shell in the axial direction. Therefore, even when the thermal expansion difference is generated between the shell and the liner, the thermal expansion difference between the seal and the liner in the axial direction becomes small. As a result, a gap generated between the radial portion of the seal and the end surface of the liner becomes small. Therefore, the leakage of the compressed air in the gap between the shell and the liner can be suppressed.

### Second Aspect

The combustor according to the first aspect, wherein:
the shell is a shell including metal; and
the liner is a CMC liner including a ceramics composite.

According to this configuration, since the liner is the CMC liner that is high in heat resistance, the combustor can perform combustion at higher temperature.

### Third Aspect

The combustor according to the first or second aspect, wherein the positioning portion positions the seal relative to the shell and the liner by being attached to the fixture.

According to this configuration, even when each of the shell and the liner does not have a special shape, the seal can be positioned relative to the shell and the liner through the fixture.

### Fourth Aspect

The combustor according to the third aspect, wherein the positioning portion includes an attachment hole in which the fixture is located.

According to this configuration, the seal can be easily attached to the fixture without using a special part.

### Fifth Aspect

The combustor according to any one of the first to fourth aspects, wherein:
the positioning portion projects from the axial portion toward the fixture in the axial direction; and
a length of the axial portion in the axial direction is shorter than a distance from the end surface of the liner to a center of the fixture in the axial direction.

According to this configuration, the seal is prevented from increasing in size, and this can suppress an increase in weight of the combustor.

### Sixth Aspect

The combustor according to any one of the first to fifth aspects, wherein the seal includes a slit located at a portion of the seal in the circumferential direction.

According to this configuration, since the seal includes the slit, the generation of stress concentration when the seal thermally expands can be prevented.

### Seventh Aspect

The combustor according to any one of the first to sixth aspects, wherein the seal has a ring shape extending in the circumferential direction.

According to this configuration, the gap between the shell and the liner can be stably sealed entirely in the circumferential direction, and attaching the seal to the combustor can be made easy.

### Reference Signs List

- 1: gas turbine
- 14: shell (outer shell)
- 14b: cooling hole
- 14c: inner peripheral surface
- 16: combustion chamber
- 21: CMC liner (outer liner)
- 21b: cooling hole
- 21c: end surface
- 21d: outer peripheral surface
- 30: fixture
- 41: seal (outer seal)
- 41a: axial portion
- 41b: radial portion
- 41c: positioning portion
- H: attachment hole
- SL: slit
- C: circumferential direction
- R: radial direction
- X: axial direction

## Claims

1. A combustor of a gas turbine,
the combustor comprising:
a shell surrounding a combustion chamber;
a liner located inside the shell in a radial direction of the shell and facing the combustion chamber;
a fixture attaching the liner to the shell with a gap between the shell and the liner; and
a seal that is shorter than the shell in an axial direction of the shell, extends in a circumferential direction of the shell, and seals the gap between the shell and the liner, wherein
the seal includes
an axial portion that is in contact with an inner peripheral surface of the shell and extends in the axial direction and the circumferential direction,
a radial portion that projects inward in the radial direction from the axial portion beyond an outer peripheral surface of the liner, is in contact with an end surface of the liner in the axial direction, and extends in the radial direction and the circumferential direction, and
a positioning portion that positions the seal relative to the shell and the liner such that the seal is in contact with the inner peripheral surface of the shell and the end surface of the liner.

2. The combustor according to claim 1, wherein:
the shell is a shell including metal; and
the liner is a CMC liner including a ceramics composite.

3. The combustor according to claim 1 or 2, wherein the positioning portion positions the seal relative to the shell and the liner by being attached to the fixture.

4. The combustor according to claim 3, wherein the positioning portion includes an attachment hole in which the fixture is located.

5. The combustor according to any one of claims 1 to 4, wherein:
the positioning portion projects from the axial portion toward the fixture in the axial direction; and
a length of the axial portion in the axial direction is shorter than a distance from the end surface of the liner to a center of the fixture in the axial direction.

6. The combustor according to any one of claims 1 to 5, wherein the seal includes a slit located at a portion of the seal in the circumferential direction.

7. The combustor according to any one of claims 1 to 6, wherein the seal has a ring shape extending in the circumferential direction.
